# EUROPEAN PATENT APPLICATION

(11) **EP 2 377 699 A1**
(43) Date of publication of application: **19.10.2011**
(21) Application number: 10160180.5
(22) Date of filing: 16.04.2010
(51) Int. Cl.: B60C 23/04

(54) **Two-way tire pressure monitoring system and method using ultra high frequencies UHF**

(71) Applicant: Delta Electronics, Inc., Taoyuan Hsien 33341 (TW)
(72) Inventor: Sun, Chun-Yi, 33341, Taoyuan Shien (TW); Lin, Jon-Hong, 33341, Taoyuan Shien (TW)
(74) Representative: 2K Patentanwälte Blasberg Kewitz & Reichel

(57) **Abstract**

A two-way tire pressure monitoring method using ultra high frequency (UHF) is used for a vehicle controller 100 and one or more tire pressure monitoring module 200. When a tire pressure data signal is transmitted to the vehicle controller 100 by the tire pressure monitoring module 200, the tire pressure data signal is transmitted via first predetermined uhf carrier. When a control signal is transmitted to the tire pressure monitoring module 200 by the vehicle controller 100, the control signal is transmitted via second predetermined uhf. The frequency of the first predetermined UHF carrier and the frequency of the second predetermined UHF carrier are the same or different.

## Description

### BACKGROUND OF THE INVENTION

### Field of the Invention

The invention generally relates to two-way tire pressure monitoring system and method , in particular to a two-way tire pressure monitoring system and method using ultra high frequency.

### Description of Prior Art

When the pressure applied to a tire (referred as tire pressure in the following) is abnormal, there are disadvantages such as affecting brake performance or increasing possibility of tires going flat while driving causing car accident in addition to decreasing tire service life and increasing fuel consumption. Therefore, a tire pressure monitor system (Tire Pressure Monitoring System, referred as TPMS in the following) is gradually applied in cars to assure driving safety so as to effectively avoid car accidents caused by driving in a car having abnormal tire pressures.

The prior art tire pressure monitor system comprises a tire pressure monitoring module installed in the tire, and a vehicle controller installed in a car. The tire pressure monitoring module measures tire pressure data of a tire, then wirelessly transmits the tire pressure data to the vehicle controller installed in the car. The tire pressure data is displayed as a reference to the driver.

However, most of the current tire pressure monitor systems use ultra high frequency carrier for communication (such as 315MHz, 434MHz, 868MHz, 915MHz or 2.4GHz). Thus, the tire pressure monitoring module one way transmits tire pressure data to vehicle controller installed in the car. Drivers are not allowed to request specific tire data (including tire temperature and pressure etc...) from tire pressure monitoring module of the tire pressure monitor system. Also, batteries in the tire pressure monitoring module can not be effectively managed which leads to a short service life of a tire pressure monitoring module.

There are some tire pressure monitor systems using two-way signal communication. An exemplary design uses vehicle controller installed in a car to wake up a tire pressure monitoring module via low frequency signal (normally 125kHz). The tire pressure monitoring module transmits tire pressure data via ultra high frequency signal to the vehicle controller installed in a car. The method overcomes the disadvantages of the above-mentioned one-way counterpart. Yet, signal frequency ranges of the vehicle controller and the tire pressure monitoring module are different (low frequency and ultra high frequency), this complicates the designs of the hardware. In addition, different signal frequency ranges may lead to disadvantages of bad reception or, even the worse, signal reception failure.

### SUMMARY OF THE INVENTION

In order to address the disadvantages of the prior art, the objective of the present invention is to provide a two-way tire pressure monitoring system using ultra high frequency (UHF) .

In order to address the disadvantages of the prior art, the other objective of the present invention is to provide a two-way tire pressure monitoring method using ultra high frequency .

In order to realize the above mentioned objective, the two-way tire pressure monitoring system using UHF of the present invention comprises a vehicle controller and a tire pressure monitoring module connected to the vehicle controller via wireless signals. The vehicle controller comprises a vehicle micro controller unit, a vehicle RF transmitter unit electrically coupled to the vehicle micro controller unit and a vehicle RF receiver unit electrically coupled to the vehicle micro controller unit. The tire pressure monitoring module comprises a tire micro controller unit, a tire RF transmitter unit electrically coupled to the tire micro controller unit, a tire RF receiver unit electrically coupled to the tire micro controller unit, and a tire pressure inspection unit electrically coupled to the tire micro controller unit. When a tire pressure data signal is transmitted to the vehicle controller by the tire pressure monitoring module, the tire pressure data signal is transmitted via first predetermined UHF carrier. When a control signal is transmitted to the tire pressure monitoring module by the vehicle controller, the control signal is transmitted via second predetermined UHF.

In order to realize the other mentioned objectives, the two-way tire pressure monitoring method using UHFis used for a vehicle controller and a tire pressure monitoring module. When a tire pressure data signal is transmitted to the vehicle controller by the tire pressure monitoring module, the tire pressure data signal is transmitted via first predetermined UHF carrier. In the two-way tire pressure monitoring method using UHF , the vehicle controller transmits a control signal via a second predetermined UHF carrier to the tire pressure monitoring module.

### BRIEF DESCRIPTION OF DRAWING

The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:
Fig. 1 is a block diagram illustrating a two-way tire pressure monitoring using ultra high frequency system using ultra high frequency according to the present invention; and
Fig. 2 is a flow chart illustrating a two-way tire pressure monitoring using method using ultra high frequency according to the present invention.

### DETAILED DESCRIPTION OF THE INVENTION

The feature of the two-way tire pressure monitoring system and method using UHF of the present invention is that a tire pressure monitoring module installed in a tire and a vehicle controller installed in a car both use ultra high frequency (UHF) carrier to transmit signals. According to the present invention, the ultra high frequency band ranges between 300MHz∼3GHz and the frequency of the predetermined UHF carrier can be 315MHz, 434MHz, 868MHz, 915MHz or 2.4GHz. Such system is allowed to deliver low cost and high performance and detailed in the following:

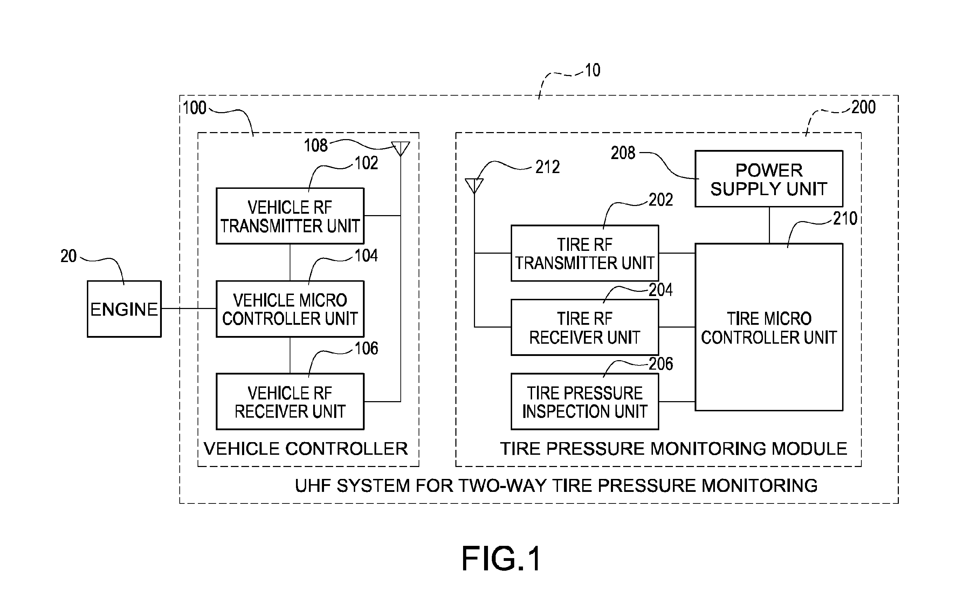

Fig. 1 is a block diagram illustrating a two-way tire pressure monitoring system using ultra high frequency according to the present invention. According to the present invention, the two-way tire pressure monitoring system using UHF 10 is used in an engine 20. The two-way tire pressure monitoring system using UHF 10 comprises a vehicle controller 100 and a tire pressure monitoring module 200. The tire pressure monitoring module 200 is connected to the vehicle controller 100 via wireless signals.

The vehicle controller 100 comprises a vehicle micro controller unit 104, a vehicle RF transmitter unit 102 electrically coupled to the vehicle micro controller unit 104, a vehicle RF receiver unit 106 electrically coupled to the vehicle micro controller unit 104, and a vehicle antenna unit 108 electrically coupled to the vehicle RF transmitter unit 102 and the vehicle RF receiver unit 106. The vehicle micro controller unit 104 is the processing center of the vehicle controller 100. The vehicle RF receiver unit 106 receives signal from and transmits signal to the vehicle RF transmitter unit 102 as well as performing wireless communication with other electronic devices.

The tire pressure monitoring module 200 comprises a tire micro controller unit 210, a tire RF transmitter unit 202 electrically coupled to the tire micro controller unit 210, a tire RF receiver unit 204 electrically coupled to the tire micro controller unit 210, a tire pressure inspection unit 206 electrically coupled to the tire micro controller unit 210, a power supply unit 208 (such as a battery) electrically coupled to the tire micro controller unit 210, and a tire antenna unit 212 electrically coupled to the tire RF transmitter unit 202 and the tire RF receiver unit 204. The tire micro controller unit 210 is the processing center of the tire pressure monitoring module 200, receives signals from the tire RF receiver unit 204 and transmits signals to the tire RF transmitter unit 202 as well as performing wireless communication with other electronic devices.

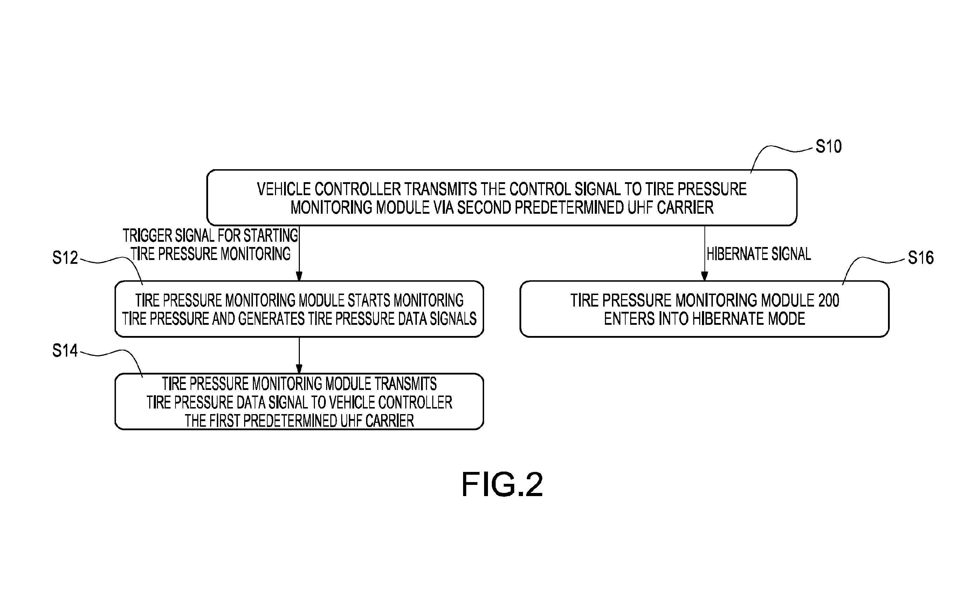

Fig. 2 is a flow chart illustrating a two-way tire pressure monitoring method using UHF according to the present invention. Refer to Fig. 1 and Fig. 2, when the tire pressure monitoring module 200 transmits a tire pressure data signal to the vehicle controller 100, the tire pressure data signal is transmitted via a first predetermined UHF carrier. When the vehicle controller 100 transmits a control signal to the tire pressure monitoring module 200, the control signal is transmitted via a second predetermined UHF carrier. The frequency of the first predetermined UHF carrier and the frequency of the second predetermined UHF carrier can be, for example, 315MHz, 434MHz, 868MHz, 915MHz or 2.4GHz. The carrier frequency of the first predetermined UHF carrier and the carrier frequency of the second predetermined UHF carrier can be the same or different.

The vehicle controller 100 transmits the control signal to the tire pressure monitoring module 200 via the second predetermined UHF carrier (S10). If the control signal is a trigger signal to start tire pressure monitoring, then the tire pressure monitoring module 200 starts monitoring tire pressure and generates the tire pressure data signals (S12). Then, the tire pressure monitoring module 200 transmits the tire pressure data signal to the vehicle controller via the first predetermined UHF carrier (S14). When the engine 20 stops operation, the control signal is a hibernate signal, the vehicle controller 100 transmits the hibernate signal via the second predetermined UHF carrier to the tire pressure monitoring module 200 to trigger the tire pressure monitoring module 200 entering into hibernate mode (S16), so as to save the power provided by the power supply unit 208.

According to the present invention, the feature of the two-way tire pressure monitoring method using UHF is that the tire pressure monitoring module 200 and the vehicle controller 100 both use UHF carrier (frequency of the UHF carrier can be, for example, 315MHz, 434MHz, 868MHz, 915MHz or 2.4GHz) for signal transmission. Moreover, the same antenna is used for signal transmission (the tire pressure monitoring module 200 uses the tire antenna unit 212; the vehicle controller 100 uses the vehicle antenna unit 108). Therefore, the configuration of the antenna is simplified, product cost is reduced, and the signal reception status is improved.

In addition, if a driver desires to know the temperature, pressures etc... of a specific tire, the vehicle controller 100 directly transmits signals to the tire pressure monitoring module 200 to request immediate feedback of the temperature, pressures etc... of the specific tire. In a current one-way tire pressure monitor system, tire pressure monitoring is triggered until the tire speed exceeds a certain value tire pressure monitoring module in order to save battery power of the tire pressure monitoring module. The two-way tire pressure monitoring system and method using UHF of the present invention can be used for retrieving temperature, pressures etc of tires without tire in operation status.

## Claims

1. A two-way tire pressure monitoring system 10 using ultra high frequency, comprising:
a vehicle controller 100; and
a tire pressure monitoring module 200, connected to the vehicle controller 100 via wireless signals,
wherein the vehicle controller 100 comprises:
a vehicle micro controller unit 104;
a vehicle RF transmitter unit 102, electrically coupled to the vehicle micro controller unit 104; and
a vehicle RF receiver unit 106, electrically coupled to the vehicle micro controller unit 104,
wherein the tire pressure monitoring module 200 comprises:
a tire micro controller unit 210;
a tire RF transmitter unit 202, electrically coupled to the tire micro controller unit 210;
a tire RF receiver unit 204, electrically coupled to the tire micro controller unit 210; and
a tire pressure inspection unit 206, electrically coupled to the tire micro controller unit 210,
wherein, the tire pressure monitoring module 200 transmits a tire pressure data signal to the vehicle controller 100, the tire pressure data signal is transmitted via first predetermined UHF carrier; and the vehicle controller 100 transmits a control signal to the tire pressure monitoring module 200, the control signal transmitted via a second predetermined UHF carrier .

2. The system 10 of claim 1, wherein the frequency range of the first predetermined UHF carrier is 300mhz∼ 3ghz.

3. The system 10 of claim 1, wherein the frequency range of the second predetermined UHF carrier is 300mhz ∼ 3ghz.

4. The system 10 of claim 1, wherein the frequency of the first predetermined UHF carrier and the frequency of the second predetermined UHF carrier are the same.

5. A two-way tire pressure monitoring method using ultra high frequency used for a vehicle controller 100 and a tire pressure monitoring module 200, the tire pressure monitoring module 200 transmitting a tire pressure data signal to the vehicle controller 100 transmitted via first predetermined uhf carrier, the method comprising:
a. the vehicle controller 100 transmitting a control signal via a second predetermined UHF carrier to the tire pressure monitoring module 200 .

6. The method of claim 5, wherein the control signal in the step a is a trigger signal to start monitor the tire pressure, the method further comprising:
b. the tire pressure monitoring module 200 starting to monitor tire pressure and generate the tire pressure data signal; and
c. the tire pressure monitoring module 200 transmitting the tire pressure data signal via the first predetermined UHF carrier to the vehicle controller 100.

7. The method of claim 5, wherein the control signal in the step a is a hibernate signal, an engine 20 stops operating in the step a, the vehicle controller 100 transmits the hibernate signal via the second predetermined UHF carrier to the tire pressure monitoring module 200 to trigger the tire pressure monitoring module 200 entering into hibernate mode.

8. The method of claim 5, wherein the carrier frequency of the first predetermined UHF carrier range is 300mhz ∼ 3ghz.

9. The method of claim 5, wherein the carrier frequency of the second predetermined UHF carrier range is 300mhz ∼ 3ghz.

10. The method of claim 5, wherein the carrier frequency of the first predetermined UHF carrier and the carrier frequency of the second predetermined UHF carrier are the same.

## Amended claims

### Amended claims in accordance with Rule 137(2) EPC.

**1.** A two-way tire pressure monitoring system (10) using ultra high frequency, comprising:
a vehicle controller (100); and
a tire pressure monitoring module (200), connected to the vehicle controller (100) via wireless signals,
wherein the vehicle controller (100) comprises:
a vehicle micro controller unit (104);
a vehicle RF transmitter unit (102), electrically coupled to the vehicle micro controller unit 104; and
a vehicle RF receiver unit (106), electrically coupled to the vehicle micro controller unit (104,
wherein the tire pressure monitoring module (200) comprises:
a tire micro controller unit (210);
a tire RF transmitter unit (202), electrically coupled to the tire micro controller unit (210);
a tire RF receiver unit (204), electrically coupled to the tire micro controller unit (210); and
a tire pressure inspection unit (206, electrically coupled to the tire micro controller unit (210), and power supply unit (208) electrically coupled to the tire micro controller unit (210);
wherein, the tire pressure monitoring module (200) transmits a tire pressure data signal to the vehicle controller (100), the tire pressure data signal is transmitted via first predetermined UHF carrier;
**characterized** that the vehicle controller (100) transmits a control signal to the tire pressure monitoring module (200), the control signal transmitted via a second predetermined UHF carrier, the control signal is a trigger signal to start the tire pressure monitoring or a hibernate signal to trigger the tire pressure monitoring module entering into hibernate mode, so as to save the power provided by the power supply unit (208)..

**2.** The system (10) of claim 1, wherein the frequency range of the first predetermined UHF carrier is 300mhz~3ghz.

**3.** The system (10) of claim 1, wherein the frequency range of the second predetermined UHF carrier is 300mhz~3ghz.

**4.** The system (10) of claim 1, wherein the frequency of the first predetermined UHF carrier and the frequency of the second predetermined UHF carrier are the same.

**5.** A two-way tire pressure monitoring method using ultra high frequency used for a vehicle controller (100) and a tire pressure monitoring module (200) comprising a power supply unit (208), the tire pressure monitoring module (200) transmitting a tire pressure data signal to the vehicle controller (100) transmitted via first predetermined uhf carrier, the method comprising:
wherein
a. the vehicle controller (100) transmitting a control signal via a second predetermined UHF carrier to the tire pressure monitoring module (200);
the control signal is a trigger signal to start the tire pressure monitoring or a hibernate signal to trigger the tire pressure monitoring module entering into hibernate mode, so as to save the power provided by the power supply unit (208).

**6.** The method of claim 5, wherein the control signal in the step a is a trigger signal to start monitor the tire pressure, the method further comprising:
b. the tire pressure monitoring module (200) starting to monitor tire pressure and generate the tire pressure data signal; and
c. the tire pressure monitoring module (200) transmitting the tire pressure data signal via the first predetermined UHF carrier to the vehicle controller (100).

**7.** The method of claim 5, wherein the control signal in the step a is a hibernate signal, an engine 20 stops operating in the step a, the vehicle controller (100) transmits the hibernate signal via the second predetermined UHF carrier to the tire pressure monitoring module (200) to trigger the tire pressure monitoring module (200) entering into hibernate mode.

**8.** The method of claim 5, wherein the carrier frequency of the first predetermined UHF carrier range is 300mhz~3ghz.

**9.** The method of claim 5, wherein the carrier frequency of the second predetermined UHF carrier range is 300mhz~3ghz.

**10.** The method of claim 5, wherein the carrier frequency of the first predetermined UHF carrier and the carrier frequency of the second predetermined UHF carrier are the same.
